# EUROPEAN PATENT APPLICATION

(11) **EP 4 455 813 A1**
(43) Date of publication of application: **30.10.2024**
(21) Application number: 23169645.1
(22) Date of filing: 25.04.2023
(51) Int. Cl.: G05B 19/4093, B23K 26/36, B23K 26/352, G05B 19/4097

(54) **A METHOD FOR COMPUTING A MACHINING TOOLPATH APPLIED FOR LASER MACHINING PROCESS**

(71) Applicant: GF Machining Solutions SA, 1217 Meyrin 1 (CH)
(72) Inventor: Conseil, David, 74160 Collonges-sous-Salève (FR); Laporte, Charles Eric, 92140 Clamart (FR)
(74) Representative: Li Schrag, Yue

(57) **Abstract**

The present invention is related to a method for computing a machining toolpath applied for laser machining process, in which a laser beam is emitted by a laser head installed in a laser machine tool for ablating the material of a part for forming a pattern thereon. The method comprises:
a. obtaining part data defining the geometry of the part;
b. obtaining image data defining the pattern to be machined on the part by ablating the material of the part;
c. obtaining specified machine stroke defining the maximum movement of the axes of the machine tool;
d. obtaining part positioning data defining the position of the part to be mounted in the machining area of the machine tool; and
e. computing the machining tool path based on the part data, the image data, the part positioning data and the specified machine stroke by a computer, wherein the machining tool path includes a plurality of laser head positions.

## Description

The present invention is related to a method for computing a machining toolpath applied for laser machining process.

### BACKGROUND OF INVENTION

The laser ablation method and the machine tool for machining parts by laser texturing are generally known. The patent applications EP 2 301 706 describes an example of a laser texturing machine.

In the past, various methods have been proposed for optimizing laser-machining process. For example, several methods are proposed to improve the quality of the machined part and reduce the machining time. The traditional ablation method often generates defects such as visible markings on the machined part, which has a negative impact on the quality of produced parts. The document EP 3 047 932 discloses a method that makes it possible to reduce the visible markings, while reducing the machine time.

These days, a demand of the laser machining process for engraving large parts has been increased, in particular, 5-axis laser engraving process applied for large parts, e.g. a dimension of more than 1 meter is preferred. The laser-texturing machine makes possible machining complex textures even on the biggest molds such as large positive mold, door panels, and dashboards molds. For example, molds for automotive industry can be produced by laser ablation instead by chemical process to reduce the environmental damage. In the past, such parts are normally produced by chemical etching. Such chemical process is known to be highly hazardous for the environment, thus, it tends now to be replaced by laser texturing with advantages in the process efficiency and quality.

This requires a large size of laser machine tool to be able to receive such large part therein and machine it from all directions. The maximum size of a part, which can be engraved by laser within the working volume of the machine is dependent on the topology of the part itself. Today, simulation of the laser texturing process is processed by taking into account the worst possible part shape. Hence, the potential ablation volume of the machine is unnecessarily reduced and the laser machining process is not optimized.

EP 3 834 984 discloses a 5-axis machine tool having a gantry-type aimed to machine such large parts. Nevertheless, the length of mechanical axis of the machine tool is limited. For example, the laser machine tool of GF Machining Solutions Laser S 2500, has a stroke limit of 2500 mm, 2000 mm and 2500 mm in X-axis, Y-axis and Z-axis, respectively. Thus, currently some large parts cannot be machined by the laser machine tool. The reason is that the volume of the machine tool is not optimally used, and therefore causes a limitation of size of the part, which can be machine by the laser machine tool.

### SUMMARY OF THE INVENTION

It is an objective of this invention to provide a method for computing a machining toolpath applied for laser machining process with increased machining volume. In particular, the machining volume can be fully utilized. It is an objective of this invention to provide a laser machine tool for machining large part.

To achieve the above objects, the present invention provides a method for computing a machining toolpath applied for laser machining process, in which a laser beam is emitted by a laser head installed in a laser machine tool for ablating the material of a part for forming a pattern thereon. The method comprises the steps of: obtaining part data defining the geometry of the part; obtaining image data defining the pattern to be machined on the part; obtaining a specified machine stroke defining the maximum movement of the axes of the machine tool; obtaining part positioning data defining the position of the part to be mounted in the machining area of the machine tool; and computing the machining toolpath based on the part data, the image data, the part positioning data and the specified machine stroke by a computer, wherein the machining toolpath includes a plurality of laser head positions.

The method of the present invention is especially applicable for a laser machining process for engraving a pattern, in particular a texture or a cavity.

The laser machine tool comprises a laser head and a machine table, on which the part is mounted. Normally, the machine table stays at the same position during the machining while the laser head is moved to different positions to ablate the material at the different positions on the part. The machine tool has at least three linear axes, X, Y and Z for moving the laser head in these three directions. The advanced machine tool, namely 5-axes laser machine tool has two addition rotational axes B and C for rotating the laser heads around these two axes.

Before the machining, a machining file including machining data must be generated based on the geometry of the part and the pattern to be engraved thereon. A control unit of the machine tool can read the machining file to control the movement of the laser head and the movement of the laser beam emitted by the laser head, since the machining file defines where the material should be removed and the corresponding positions of the laser head. The generated machining file essentially consists of a machining toolpath, which comprises a succession of laser head positions that the laser machining head must occupy in relation to the part, and, for each position, a succession of ablation operations corresponding to the scanning that the laser beam must perform from this position. Therefore, the machining file includes the coordinates of the mechanical axes and the optical axes, namely, the machining file includes a defined mechanical tool path related to the movement of the mechanical axes and an optical tool path related to the movement of the optical devices. In particular, for each laser head position, a sub-program defining the optical toolpath is activated. The optical toolpath is performed by the optical device, especially a scanner, so called galvanometer.

The mechanical axes of a 5-axis machine tool include the three linear axes, X, Y and Z and two rotational axes B and C. The optical axes define the movements of the galvanometer. The positioning of the laser head has a direct impact on both the machining time and the finishing quality of the texturing. Generally, the machining file is prepared out of the machine tool in an external processing unit or a computer and loaded into the machine tool when the machining job starts. However, it is not excluded to generate the machining file in the machine tool by a processing unit or a computer, for example by the control unit of the machine tool.

In the preparation phase of the machining, modeling the geometry of the part and analyzing image data defining the pattern such as texture and cavity are needed. The machining file is generated by considering the pattern and the geometry of the part. Thus, the part is normally modelled numerically by a meshing of usually triangles to generate a 3-D modelling file, for example, the part data is a mesh file.

The patterns defined by the image data are additionally applied respectively processed by the software to the mesh file of the modeled 3D-surface of the part. A grey level image is usually used to represent a three-dimensional texture. The grey level image is composed by a multiplicity of individual pixels, whereby the depth of a position in the texture is defined as a corresponding grey level of the corresponding pixel. The lighter a pixel, the less deep is the texture at that specific point. The darker the pixel, the deeper is the texture at that specific position.

Normally, a so-called machining volume is provided to the custom. The machining volume indicates the size of the part, which can be machined. Until today, this calculated machining volume is determined based on the rule that the laser beam hits the surface of the part in a defined machining direction, since ablation from this direction provides the best machining results. This situation has a drawback since the geometry of the surface to be ablated and the position of the part mounted in the machining area are not considered for the calculation of the maximum machining volume. Thus, the machining volume is not optimally utilized. In the known method, the specified machine stroke is not considered for determining the machining toolpath. Thus, the part can only be machined by the machine tool, which has sufficient machining volume. The method of the present invention provides the possibility to increase the maximum part size that can be machined by optimizing the utilization of the machining volume.

Hence, besides the part data and the image data, the specified machine stroke is essential for the method of the present invention. For each laser machine tool type, a maximum stroke of mechanical axis is defined for X, Y, Z directions. For a 5-axis machine tool, the maximum stroke of two rotation axes are also specified. This value has a direct impact on the maximum size of the part, which can be machined by this machine tool. The specified machine tool stroke is a specification of the machine tool defined by the machine tool manufacturer. The machine stroke is given in three linear axes X, Y and Z and two rotation axes, namely B-axis and C-axis defined as the rotation axes around Y and Z. More specifically, the method of the present invention comprises the steps of: defining a plurality of machining layers to be machined based on the part data and the image data; defining for each machining layer a plurality of patches based on the part data and the image data, each patch being machined by the laser head from a single laser head position; calculating a laser head position for each patch based on the part data, the image data and the part positioning data; comparing the laser head position of each patch with the specified machine stroke; and recalculating the laser head position, if the laser head position exceeds the real machine stroke.

A complete texturing machining of a part consists in performing a plurality of ablation layers and for each layer a plurality of ablation patches. A patch is a defined area on one layer, which must be ablated by the laser head from one single laser head position. During ablating one patch, the mechanical axes are not moved and the laser beam is moved by optical axes to reach the desired position within the patch. If for example the part is broken down into 37 layers with 6000 positions per layer, then it will be necessary to perform up to 222 000 (37 × 6000) repositioning of the laser head, a particular scanning of the laser ray being associated with each laser head position for the machining of the patch corresponding to this position.

In the known method, the laser head position for each patch is determined without considering the specified machine stroke. In the present invention, an additional verification step is introduced for optimizing the utility of the machining volume. In this step, the calculated laser head position for each patch is compared with the specified machine stroke given by the manufacture of the machine tool. If the laser head position exceeds the specified machine stroke, the laser head position for this patch must be recalculated. During recalculation, several laser head positions, which are possible for ablating this patch, are computed and each of which is compared with the specified machine stroke and the best position among them is chosen as the final laser head position included in the machining toolpath. The best position is selected based on a defined criterion, which is one or more of the following: machining quality, machining time and machining volume. Since a patch is intended to be machined from a single position of the laser head, for each patch a machining direction must be determined based on the defined criterion and applied for machining the patches. The machining direction is the direction of the laser beam striking the surface to be machined, when the galvanometer is controlled to be at the zero position, namely all the coordinates of the galvanometer are zero.

In effect, the highest quality of a laser machining can be achieve when the angle of the machining direction relative to the normal of the surface to be ablated is zero. The line perpendicular to the surface at a specific point of one patch is called the normal direction. However, it is difficult to determine the machining toolpath in a way that the laser beam always hits the surface in the normal direction. In most of applications, the surface of the part is not planar and even a small area within the patch is not planar, therefore, it is almost impossible to define one normal direction for one patch. Thus, algorithm is applied to define for each patch a machining direction based on design constrains.

Thus, in a preferred variant, for each patch a machining direction is defined and if the laser head position exceeds the specified machine stroke, the machining direction is adjusted, in particular a deviation is applied to the machining direction such that the laser head position can stay within the machine stroke. Particularly, the recalculated laser head position ensures a minimum deviation of machining direction. The goal is to ensure the recalculated the laser head position is within the machine stroke and at the same time, the machining direction is possibly close to the optimum machining direction. The present invention provides a method or a software that takes into account the part position inside the working area as well as the topology of the part and the mechanical axis limitation of the machine tool, namely specified machine stroke, to be able to compute each possible laser head position inside the machine within its specified machine stroke. The method can increase the machining volume without considerable deterioration of the quality of the part. Since the machining direction has a directly impact on the quality of the machined part, thus, minimizing possible deviations of the laser texturing axis to the optimum machining direction can ensure the quality.

Advantageously, a threshold value is set for the deviation of the machining direction to ensure the machining quality. Preferably, the threshold value defines the angle between the adjusted machining direction and the originally calculated machining direction and for example, is in the range of from 10 to 60 degree.

Especially, if the deviation of the machining direction for one patch exceeds the threshold value, the patch is divided into at least two patches. This overcomes the drawback of the know method without compromising the machining quality.

In one variant, only the laser head positions, which exceed the specified machine stroke, are recalculated. However, it is also possible to recalculate all the laser head positions if at least one laser head position exceeds the specified machine stroke.

The goal of the present invention is to increase the maximum part size that can be machined. This is achieved by comparing the computed laser head position for each patch with the specified machine stroke and changing the machining direction if necessary.

The aim is to develop an algorithm which, knowing the position of the part in the machine as well as the geometry of the part, will be able to determinate if the part can be processed inside the machine much more precisely, by allowing a minimal angle deviation of the machining direction.

In one preferred variant, the method comprises the steps of: calculating an initial laser head position in relation to the part for machining based on the part data and the image data; calculating a required machine stroke, which is the maximum movement of the axis needed to allow for positioning the laser head at the initial laser head positions calculated for all patches; calculating an optimum part position based on the required machine stroke; and recalculating the laser head positions for all patches using the optimum part position.

The laser head positions are dependent on where the part is mounted in the machine tool. If the part is not optimally positioned in the machine tool, the machining volume is wasted. Thus, in this variant, an optimum part position is first calculated and the laser head positions for all patches are calculated by applying this optimum part position. The initial machining toolpath including the initial laser head positions is determined in a way such that the machining direction is determined without considering the machine stroke limitation. Based on the initial machining toolpath, the required machine stroke is calculated. The required machine stroke is the maximum distance between two laser head positions for two patches in one direction. In particular, the required machine stroke is the distance between two laser head positions of two patches, which are apart farthest away from each other in one direction. Thus, the required machine stroke is calculated for X, Y and Z-axis, respectively. Preferably, the required machine stroke is also calculated for the two rotation axes, B and C. Having this value, the optimum part position can be derived.

Additionally, the required machine stroke can be compared with the specified machine stroke to verify if the specified machine stroke is large enough to machine this part. If the required machine stroke is larger than the specified machine stroke, the machining path is recalculated by adjusting the machining direction of at least one patch. Logically, the specified machine stroke and the required machine stroke for each axis is compared. For example, the specified machine stroke for X-axis is compared with the required machine stroke in X-axis, the specified machine stroke for Y-axis is compared with the required machine stroke in Y-axis, and the specified machine stroke for Z-axis is compared with the required machine stroke in Z-axis.

The present invention is related to a method for machining a part by laser machining process, in which a laser beam is emitted by a laser head installed in a laser machine tool for ablating the material of a part for forming a pattern thereon. The method comprises the steps of: conducing the method of calculating the machining toolpath according to the present invention by a computer; mounting the part in the machine tool; and machining the part by controlling the laser head to the determined laser head positions. In a preferred variant, the part positioning data is displayed on the machine tool.

### BRIEF DESCRIPTION OF THE DRAWINGS

In the following, a more particular description of the present invention is further described. The embodiments are described and explained with details with reference to accompanying drawings in which:
- Fig. 1a, Fig. 1b: illustrates a schematic view of the machining area;
- Fig.2: illustrates a schematically how to change the laser head position;
- Fig.3: illustrates schematically determining a required machine stroke;
- Fig. 4a, Fig. 4b: illustrates schematically applying an optimum part position; and
- Fig.5a, Fig.5b: illustrates schematically the variant of dividing the patch into more patches.

### EXEMPLARY EMBODIMENTS

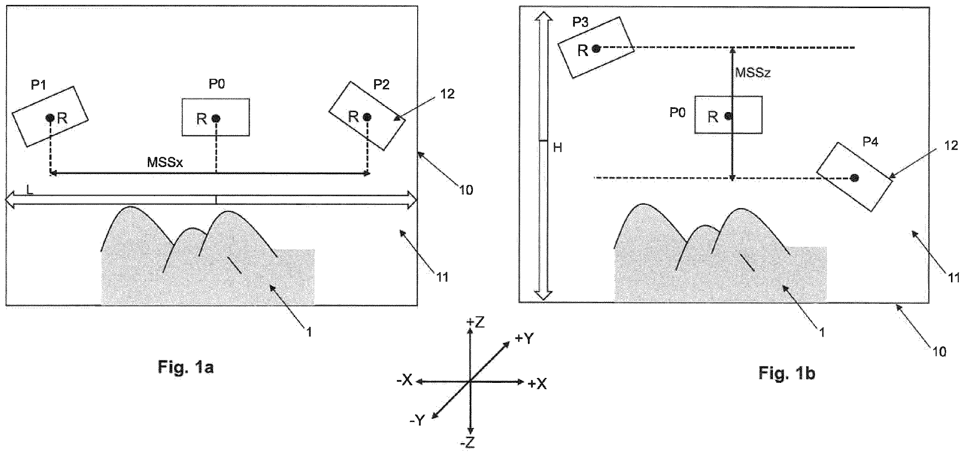

Figure 1a and 1b illustrate a schematic view of a machining area 11 of a laser machine tool 10. This schematic view is simplified and therefore show only the machining area 11 with a part 1 mounted therein. In further, a two-dimensional view of X-Z plane is shown. The thick arrows indicate the inner dimension of the machine tool, which is the inner size of the housing of the machine tool. The length in X direction is denoted with the letter L and the height in Z direction is denoted with the letter H. The specified machine stroke is normally smaller than the inner dimension of the machine tool. The machine stroke represents the mechanical axis movement limit. This value gives the range of the movement of the laser head 12 measured at a reference point R.

Figure 1a illustrates the machine stroke in X direction indicated by the thin arrow and denoted with MSSx. Figure 1a shows three positions of the laser head P0, P1 and P2.

The position P0 illustrates the zero point in the X, Y and Z directions. The laser head is movable in both directions +X and -X. The positons P1 and P2 illustrate the X-axis movement limit positions and are the farthest positions of laser head in +X and -X directions. The distance of the reference point R in X direction measured by positioning the laser head at these two limit positions, namely points P1 and P2 gives the machine stroke in X direction MSSx.

Figure 1b illustrates the machine stroke in Z direction indicated by the thin arrow and denoted with MSSz. Figure 1b shows three positions of the laser head, P0, P3 and P4. The position P0 illustrates again the zero point. The laser head is movable in both directions +Z and -Z. The positons P3 and P4 illustrate the Z-axis movement limit positions and are the farthest positions of laser head in +Z and -Z directions. The distance of the reference point R in Z direction measured by positioning the laser head at these two limit positions, namely points P3 and P4 gives the machine stroke in X direction MSSz. The machine stroke in Y direction can be determined in the same way and is not illustrated in the figures.

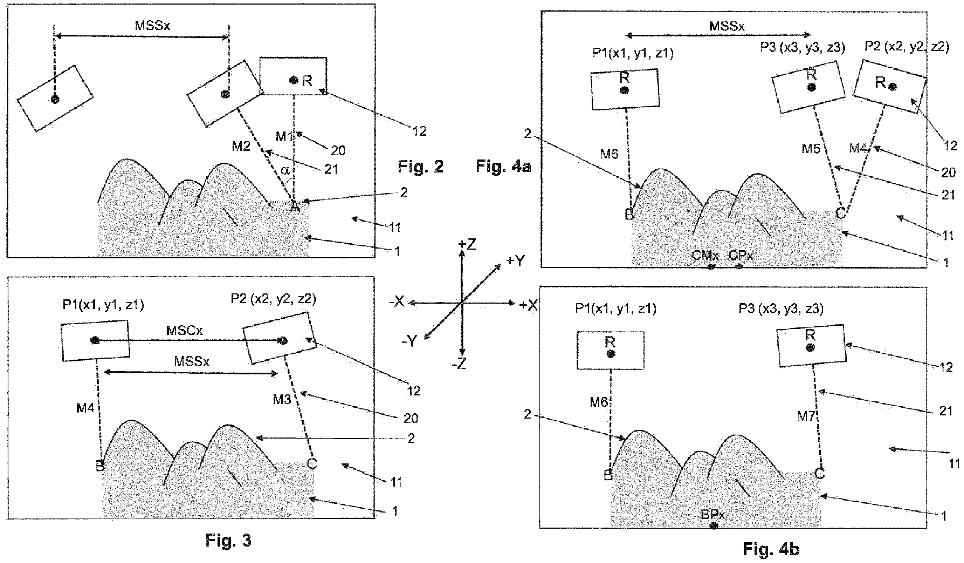

Figure 2 illustrates how the laser beam ablates the material of the part. The part is divided into several machining layers. Each layer again is divided into a plurality of patches. In the figures 2, 3, 4a and 4b, a view of X-Z plane is shown. Since the focus of the present invention is not how to generate machining layers and patches, in the figures the machining layers are not depicted and the patches are merely indicated by the letters A, B and C to show their position in X direction.

As shown in the figure 2 the laser head emits a laser beam in a machining direction 20 to hit the surface of the part at a defined position. The material of the part at this position is then ablated. The dashed line M1 indicates an ideal machining direction 20 for the patch A on one machining layer of the part, which is orthogonal to the surface 2 of the part at this point. However, if the patch A will be machined from this machining direction, the laser head will exceed the specified machine stroke in X-direction MSSx. For this reason, applying the known method, this part cannot be machined. Known CAM software is not able to adapt the final positions of the laser head and adjusting the machining direction by allow an angle deviation in order to be able to process the part when the laser head movements are close or further to the specified machine stroke. In the present invention, the machine stroke is provided as an input parameter for the calculation of the machining toolpath, and this enables the comparison of calculated laser head position with the specified machine stroke. The bad laser head positions, which are not compatible with the specified machine stroke can already be adjusted during the calculation of the machining toolpath. The dashed line M2 indicates one adjusted machining direction with a new laser head position. This new laser head position is within the specified machine stroke. The laser head position can certainly exceed the specified machine stroke in more than one direction, which is for simplicity not depicted in the figures.

Figure 3 shows schematically how a required machine stroke is calculated. For machining patches B and C the laser head must be positioned at the positions P1 and P2, respectively. These are the positions, which are farthest away from each in X direction. The specified machine stroke is e.g. the length in the X-direction indicated by MSSx. The required machine stroke in X-direction is the distance between P1 and P2 in X direction, namely the difference of the coordinates x1 and x2, denoted as MSCx. The required machine stroke in Y and Z directions are not depicted in these figures but can be determined in the same manner.

Figures 4a and 4b show schematically the variant, in which an optimum part position is first determined and then this position is applied for the calculation of the machining toolpath. The figure 4a shows the situation that the part is not positioned in an optimum position. The dark dots CPx and CMx indicate the middle position of the part and the middle position of the machine stroke in X direction, respectively. The part is arranged more on the right side of the machining area, therefore, the laser head position P2 for machining patch C is out of the specified machine stroke. The position of the laser head is recalculated by adjusting the machining direction from M4 to M5. The laser head position is changed from point P2 to P3. The new laser head position is within the specified machine stroke. However, the adjusted position has a large angle deviation relative to the normal direction of the patch. The part can be machined by applying this machining direction, but this position can be further improved by positioning the part at an optimum position. It can also happen that the position P2 cannot be adjusted to a new position, because no new position can be found within the specified machine stroke or the deviation of machining direction is too large. Thus, positioning the part at an optimum position can contribute to the machining quality and further improve the machining volume.

To achieve this, an initial machining toolpath is determined without considering the machine stroke. The patches B and C are the two patches having the largest distances in the X-direction. The laser head positions P1 and P2 are therefore the positions requiring the maximal X-axis movements of the laser head. The required machine stroke in X direction is computed based on the determined initial machining toolpath, which provides the coordinates of the positions P1 and P2. The optimum part position is calculated based on the determined required machine stroke MSCx, e.g. as shown in figure 4b, the part is located at the optimum part position BPx.

After the optimum part position is determined, the machining path is calculated again by applying the optimum part position. If the new calculated laser head position P2 is now within the specified machine stroke, this position is the final laser head position for patch C. If the new calculated laser head position P2 is still out of the specified machine stroke, the machining direction is adjusted and the laser head position is changed from P2 to P3. When the part is positioned at the optimum part position, the positions of laser head P1 and P2 can be adjusted such that the machining directions M6 and M7 can be improved. Both machining directions have now less angle deviation to the normal direction of the patch.

For clarity the figures 1, 2, 3, 4a and 4b all show two-dimensional view in the X-Z plane and the examples are presented only for one direction, namely X-direction. However, the method of the present invention is not limited to the simplified example. The laser head is movable in 5-axis, thus if the laser head position must be adjusted, a combination of any 5-axes may be needed.

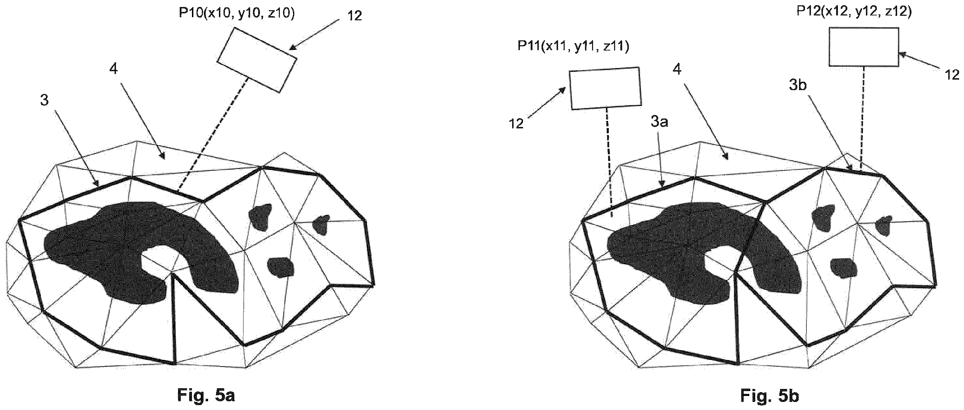

Figure 5a and b shows the embodiment of dividing one patch into at least two patches to optimizing the quality of the machined part. Figure 5a shows one patch 3 of one machining layer. Since the calculated laser head position exceeds the specified machine stroke, the laser head position must be adjusted to a position P10 having a large deviation angle. Even if the patch can be machined from this position, the quality of the machined part is bad. To overcome this problem, the patch is divided into two patches 3a, 3b. The machining path is recalculated and these two patches can be machined by positioning the laser head at the positions P11 and P12. These two positions are within the specified machine stroke and the quality of the machined part is ensured. This example represents also the situation that the quality of the machined part has a higher priority than the machining time. Dividing one patch into more patches can leads to increasing the machining time due to the repositioning the laser head. Thus, if the machining time has higher priority than the quality of the machined part, other strategy may be selected, for example the patch will not be divided into several patches.

### LIST OF REFERENCES

- 1: part
- 2: surface of the part
- 3, 3a, 3b: patch
- 4: meshing triangle
- 10: machine tool
- 11: machining area
- 12: laser head
- 20, 21: machining direction

## Claims

1. A method for computing a machining toolpath applied for laser machining process, in which a laser beam is emitted by a laser head (12) installed in a laser machine tool (10) for ablating the material of a part (1) for forming a pattern thereon comprising:
a. obtaining part data defining the geometry of the part;
b. obtaining image data defining the pattern to be machined on the part by ablating the material of the part;
c. obtaining a specified machine stroke defining the maximum movement of one axis of the machine tool;
d. obtaining part positioning data defining the position of the part to be mounted in the machining area of the machine tool; and
e. computing the machining toolpath based on the part data, the image data, the part positioning data and the specified machine stroke by a computer, wherein the machining toolpath includes a plurality of laser head positions.

2. The method according to claim 1, wherein the method further comprises the following steps:
a. defining a plurality of machining layers to be machined based on the part data and the image data;
b. defining for each machining layer a plurality of patches (3) based on the part data and the image data, each patch being machined by the laser head from a single laser head position;
c. calculating a laser head position for each patch based on the part data, the image data and the part positioning data;
d. comparing the laser head position of each patch with the specified machine stroke; and
e. recalculating the laser head position, if the laser head position exceeds the specified machine stroke.

3. The method according to claim 1 or 2, wherein for each patch a machining direction (20) is defined and if the laser head position exceeds the specified machine stroke, a minimum deviation is applied to the machining direction such that the laser head position is within the specified machine stroke.

4. The method according to claim 3 or 4, wherein a threshold value is set for the deviation of machining direction, in particular the threshold value is in the range of 10 to 80 degree.

5. The method according to one of claims 3 to 5, wherein if the deviation of the machining direction for one patch exceeds the threshold value, the patch is divided into at least two patches.

6. The method according to one of claims 2 to 6, wherein if laser head position of at least one patch exceeds the specified machine stroke, the laser head positions of all patches are recalculated.

7. The method according to one of claims 1to 6, wherein the method further comprising:
a. calculating an initial laser head position in relation to the part for machining based on the part data and the image data;
b. calculating a required machine stroke, which is the maximum movement of an axis needed to allow for positioning the laser head at the initial laser head positions calculated for all patches;
c. calculating an optimum part position based on the required machine stroke;
d. recalculating the laser head positions for all patches using the optimum part position.

8. A computer-program product comprising instructions, which, when the program is executed by a computer, cause the computer to implement the steps of the method according to one of claims 1 to 7.

9. Computer-readable storage medium comprising instructions, which when the program is executed by a computer, cause the computer to implement the steps of the method according to one of claims 1 to 7.

10. A method for machining a part by laser machining process, in which a laser beam is emitted by a laser head installed in a laser machine tool for ablating the material of a part for forming a pattern thereon comprising:
a. conducing the method according to one of claims 1 to 7 by a computer;
b. mounting the part in the machine tool; and
c. machining the part by controlling the laser head to the determined laser head positions.

11. The method according to claim 10, wherein the part positioning data is displayed on the machine tool.
